# EUROPÄISCHE PATENTSCHRIFT

(11) **EP 1 655 984 B1**
(45) Veröffentlichungstag und Bekanntmachung des Hinweises auf die Patenterteilung: **29.12.2010**
(21) Anmeldenummer: 05109081.9
(22) Anmeldetag: 30.09.2005
(51) Int. Cl.: H04W 12/08

(54) **Drahtloses Bedien- und Beobachtungssystem**
System for wirelessly operating and monitoring devices
Système pour commander et observer des dispositifs par radio

(30) Priorität: 08.11.2004 DE 102004053775
(43) Veröffentlichungstag der Anmeldung: 10.05.2006
(73) Patentinhaber: SIEMENS AKTIENGESELLSCHAFT, 80333 München (DE)
(72) Erfinder: Blank, Ernst, 91058, Erlangen (DE); Edelmann, Thomas, 96050, Bamberg (DE)

(56) Entgegenhaltungen:
- DE-A1- 10 116 217
- US-A- 6 088 450
- US-A1- 2001 035 729
- US-A1- 2004 028 017

## Beschreibung

Die Erfindung betrifft ein drahtloses System zum Bedienen und Beobachten technischer Geräte insbesondere in der industriellen Automatisierungstechnik.

Ein derartiges System bzw. Verfahren kommt beispielsweise im Industrieumfeld bei verteilt angeordneten Produktions- und Werkzeugmaschinen sowie bei Diagnose- und Serviceunterstützungssystemen zum Einsatz. Darüber hinaus ist aber auch eine Anwendung im privaten Konsumerbereich denkbar wie beispielsweise bei räumlich verteilten Haushalts- oder Unterhaltungsgeräten.

In der Automatisierungstechnik gängige Maschinensteuerungen besitzen heute in der Regel Bedien- und Anzeigeschnittstellen, für die sich ein Anwender mittels Login, Schlüsselschalter oder biometrische Verfahren authentifizieren kann, um Bedienhandlungen vorzunehmen oder Informationen abzufragen. Bedienhandlungen und Informationsanzeigen werden lokal an den Bedien- und Anzeigefeldern an der Maschine vorgenommen. Über ein meist kabelgebundenes Netzwerk ist teils auch eine Remote-Bedienung und Anzeige möglich.

Aus DE 101 16 217 A1 ist ein System und ein Verfahren zur drahtlosen Kommunikation zwischen technischen Vorrichtungen und einer oder mehrerer als Mensch-Maschine-Schnittstelle ausgebildeter HMI-Einheiten (HMI = Human-Machine-Interface) bekannt. Sobald ein Anwender mit der HMI-Einheit in ein von der technischen Vorrichtung gesendetes Nahfeld eintritt, kann über einen drahtlosen Kommunikationsweg die technische Vorrichtung mit der HMI-Einheit kommunizieren.

Aus der US 2001/0035729 A1 - Graiger et al. "Method of connecting a mobile control and/or monitoring unit to a machine and a control and/or monitoring unit for same" ist es bekannt, den Funkbereich von Sendern oder Empfängern strahlenförmig, trapezförmig oder nierenförmig zu gestalten, um den auf den Funkbereich bezogenen Bedienbereich entsprechend einzugrenzen.

Der Erfindung liegt die Aufgabe zu Grunde, eine benutzerspezifische drahtlose Bedienung und Beobachtung eines technischen Gerätes bei gleichzeitiger Gewährleistung einer sicheren Datenübertragung zu ermöglichen.

Diese Aufgabe wird durch ein System wie in Anspruch 1 definiert gelöst.

Diese Aufgabe wird ferner durch ein Verfahren wie in Anspruch 12 definiert gelöst.

Sowohl das technische Gerät als auch das mobile Gerät, das beispielsweise von einem Anwender tragbar ist, sind von einem Kommunikationsfeld umgeben. Die Kommunikationsfelder erlauben einen drahtlosen Datenaustausch zwischen dem technischen Gerät und dem mobilen Gerät und bieten dem Anwender so ein hohes Maß an Bewegungsfreiheit beim Bedienen und/oder Beobachten des technischen Gerätes.

Bei zumindest einem der zugehörigen Kommunikationsfelder lassen sich von einem Empfänger mehrer Wahrnehmungsbereiche detektieren. Selbstverständlich können aber auch sowohl das erste als auch das zweite Sendemittel ein in zwei Wahrnehmungsbereiche teilbares Kommunikationsfeld aufweisen.

Durch die erfindungsgemäße Einteilung des mindestens einen Kommunikationsfeldes in die zwei Wahrnehmungsbereiche kann implizit eine Positionsbestimmung des mobilen Gerätes relativ zum technischen Gerät durchgeführt werden. Abhängig von der Position des mobilen Gerätes bzw. des Anwenders, der beispielsweise das mobile Gerät mit sich führt, werden die Zugriffrechte festgelegt, die maßgebend dafür sind, inwieweit das mobilen Gerät zum Bedien und Beobachten des technischen Gerätes befugt ist. Dies kann automatisch erfolgen, sobald eine Überlappung der Kommunikationsfelder detektiert wird.

Vorteilhafterweise ist das mobile Gerät als mobile, von einem Anwender bewegbare HMI-Einheit, insbesondere als Web Pad, PDA oder Mobiltelefon, ausgeführt. Nähert sich der Anwender mit der HMI-Einheit dem technischen Gerät, so wird bei einer Überlappung des Kommunikationsfeldes, welches von dem technischen Gerät ausgeht, mit dem Kommunikationsfeld, das von der HMI-Einheit ausgeht, eine drahtlose Kommunikation aufgebaut. Beispielsweise ist das von der zweiten, der HMI-Einheit zugeordneten Sendeeinheit gesendete Kommunikationsfeld in die zwei Wahrnehmungsbereiche teilbar. Sobald sich einer der zwei Wahrnehmungsbereiche mit dem Kommunikationsfeld des technischen Gerätes überlappt, werden eine Kommunikation zwischen dem technischen Gerät und der HMI-Einheit aufgebaut und gewisse Zugriffsrechte des Anwender mit der HMI-Einheit auf das technische Gerät gesetzt. Bewegt sich der Anwender mit der HMI-Einheit weiter auf das technische Gerät zu, überlappt sich u. U. der andere Wahrnehmungsbereich mit dem Kommunikationsfeld des technischen Gerätes. Sobald dies detektiert wird, können sich die Zugriffsrechte ändern.

Selbstverständlich ist ein analoges Szenario auch denkbar, wenn das von dem ersten Sendemittel ausgesendete Kommunikationsfeld in zwei Wahrnehmungsbereiche teilbar ist und sich der Anwender mit der HMI-Einheit auf das technische Gerät zu bewegt. Ebenso können sowohl das erste als auch das zweite Sendemittel ein in zwei oder auch mehrere Wahrnehmungsbereiche teilbares Kommunikationsfeld aussenden.

In einer besonders vorteilhaften Ausführungsform der Erfindung ist das durch das zweite Sendemittel erzeugte Kommunikationsfeld zur Indikation von Profildaten des Anwenders vorgesehen. Auf diese Weise können z. B. bei einer Informationsvermittlung von dem technischen Gerät auf das mobile Gerät die Rolle, die Fähigkeiten und die Befugnisse des Anwenders berücksichtigt werden. So werden einem Facharbeiter u. U. andere Informationen oder auch anders aufbereitete Informationen an einem als HMI-Einheit ausgeführten mobilen Gerät eingeblendet als einem Schichtleiter. Ebenso kann zur Bedienung des technischen Gerätes in Abhängigkeit des Bedieners eine geeignete Oberfläche zur Verfügung gestellt werden. Bei der Gestaltung der Bedienoberfläche können die Zugriffsrechte des Bedieners Einfluss finden.

Indem sich der Bediener beispielsweise per Passworteingabe an dem mobilen Gerät authentifiziert, kann ein innerhalb des mobilen Gerätes oder innerhalb des technischen Gerätes abgelegtes Benutzerprofil aktiviert werden. Entsprechend der Profildaten werden über den drahtlosen Kommunikationsweg Informationen zwischen dem mobilen und dem technischen Gerät ausgetauscht und Zugriffe ermöglicht.

Eine Rechtevergabe in Abhängigkeit des Abstandes zwischen dem mobilen Gerät und dem technischen Gerät ist besonders einfach zu realisieren, wenn das Kommunikationsfeld des ersten Sendemittels einen ersten inneren Wahrnehmungsbereich und einen ersten äußeren Wahrnehmungsbereich aufweist, wobei der erste äußere Wahrnehmungsbereich den ersten inneren Wahrnehmungsbereich im Wesentlichen konzentrisch umschließt. Nähert sich ein Anwender z. B. mit einem als PDA ausgeführten mobilen Gerät, welches das zweite Sendemittel zur Erzeugung eines Kommunikationsfeldes aufweist, dem technischen Gerät, kommt es zunächst zu einer Überlappung des von dem zweiten Sendemittel ausgesendeten Kommunikationsfeldes mit dem äußeren Wahrnehmungsbereich des Kommunikationsfeldes, welches vom ersten Sendemittel ausgesendet wird. Nähert sich der Anwender weiter dem technischen Gerät, überlappt sich schließlich auch der innere Wahrnehmungsbereich mit dem Kommunikationsfeld des PDA. Der Anwender befindet sich näher bei dem technischen Gerät, was zu einer Änderung seiner Zugriffsrechte bzw. der Zugriffsrechte des PDA auf das technische Gerät genutzt werden kann.

Alternativ oder auch zusätzlich kann natürlich das Kommunikationsfeld des zweiten Sendemittels einen zweiten inneren Wahrnehmungsbereich und einen zweiten äußeren Wahrnehmungsbereich aufweisen, wobei der zweite äußere Wahrnehmungsbereich den zweiten inneren Wahrnehmungsbereich im Wesentlichen konzentrisch umschließt.

Bei einer besonders vorteilhaften Nutzung der inneren und äußeren Wahrnehmungsbereiche zur sicheren Bedienung und Beobachtung des technischen Gerätes mit dem mobilen Gerät ist das System derartig ausgeführt ist, dass bei einer Überlappung der ersten und zweiten äußeren Wahrnehmungsbereiche das technische Gerät mit dem mobilen Gerät beobachtbar ist und bei einer Überlappung der ersten und zweiten inneren Wahrnehmungsbereiche das technische Gerät mit dem mobilen Gerät bedienbar ist. Es ist beispielsweise denkbar, dass der äußere Wahrnehmungsbereich durch die Reichweite des Kommunikationsfeldes begrenzt ist und der innere Wahrnehmungsbereich durch einen Mindestwert für die Feldstärke des Kommunikationsfeldes. Dabei ergibt sich innerhalb des inneren Wahrnehmungsbereiches eine höhere Datenübertragungssicherheit bei der drahtlosen Kommunikation zwischen technischem und mobilem Gerät aufgrund der höheren Feldstärke. Daher ist es zweckmäßig, eine Bedienung des technischen Gerätes erst im inneren Wahrnehmungsbereich zuzulassen, während eine Beobachtung des technischen Gerätes schon im äußeren Wahrnehmungsbereich zulässig sein kann.

Anstelle eines von einem Anwender geführten mobilen Gerätes ist auch denkbar, dass das mobile Gerät als beweglicher Roboter ausgeführt ist. Hierbei kann es sich zum Beispiel um einen Serviceroboter handeln, der seine Serviceanweisung von dem technischen Gerät erhält, sobald er sich diesem nähert.

Eine zweckmäßige Erzeugung der Kommunikationsfelder lässt sich realisieren, indem das erste und das zweite Sendemittel als Wireless-LAN-Access-Point, DECT-Access-Point oder Bluetooth-Access-Point ausgebildet sind. Bei Wireless-LAN lässt sich eine Reichweite der Kommunikationsfelder von etwa 20-30 Metern erzielen, bei Verwendung des Bluetooth-Standards nur etwa 10 Meter.

Eine einfache Detektion der zwei Wahrnehmungsbereiche eines Kommunikationsfeldes lässt sich erzielen, indem die zwei Wahrnehmungsbereiche durch die Höhe der Feldstärke des Kommunikationsfeldes innerhalb der Wahrnehmungsbereiche unterscheidbar sind. Insbesondere bei einer Einteilung des Kommunikationsfeldes in einen inneren und einen äußeren, den inneren Wahrnehmungsbereich konzentrisch umschließenden Wahrnehmungsbereich bietet sich ein derartiger Mechanismus an, da die Feldstärke eines im Zentrum des Kommunikationsfeldes positionierten Sendemittels naturgemäß in radialer Richtung abnimmt.

Bei einer besonders vorteilhaften Anwendung ist eine erfindungsgemäße Ausführungsform des Systems für Bedien- und Beobachtungsaufgaben in der industriellen Automatisierungstechnik vorgesehen. Mit Hilfe des mobilen Gerätes lassen sich verschiedene Steuerungen von Automatisierungsanlagen im industriellen Umfeld bedienen und/oder beobachten. Bewegt sich beispielsweise ein Anwender mit einem als HMI-Einheit ausgeführten mobilen Gerät durch eine Maschinenhalle mit Automatisierungsgeräten, so kann eine Kommunikation zwischen dem Automatisierungsgerät und der HMI-Einheit immer dann aufgebaut werden, wenn sich die Kommunikationsfelder des Automatisierungsgerätes und der HMI-Einheit zumindest teilweise überlappen. Der Anwender kann sich durch die Maschinenhalle bewegen und auf diese Weise mit den verschiedenen Automatisierungsgeräten eine Kommunikation aufbauen. Hierbei können z. B. von der HMI-Einheit Profildaten an das Automatisierungsgerät gesendet werden. Anhand dieser Profildaten kann eine benutzerspezifische Kommunikation zwischen Automatisierungsgerät und HMI-Einheit erfolgen.

Im Folgenden wird die Erfindung anhand der in den Figuren dargestellten Ausführungsbeispiele näher beschrieben und erläutert. Es zeigen:
- FIG 1: ein System zum drahtlosen Bedienen und Beobachten eines technischen Gerätes und
- FIG 2: ein Anwendungsszenario für ein System zum drahtlosen Bedienen und Beobachten technischer Geräte.

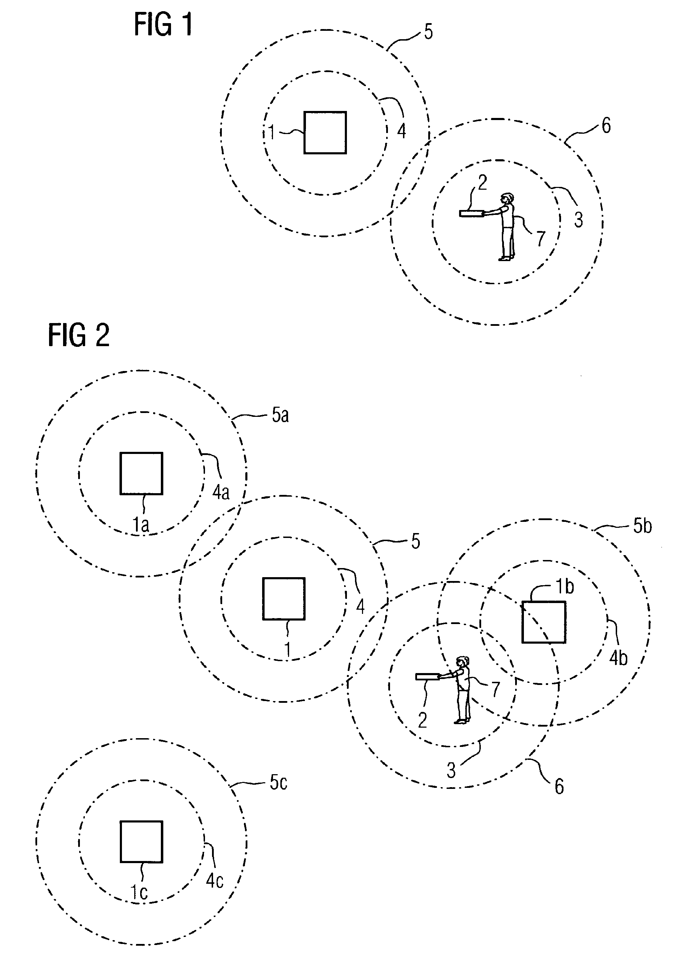

FIG 1 zeigt ein System zum drahtlosen Bedienen und Beobachten eines technischen Gerätes 1 als Beispiel für eine erfindungsgemäße Ausführungsform. Bei dem technischen Gerät 1 kann es sich z. B. um eine Maschinesteuerung handeln aber auch um ein Haushaltsgerät oder ein Gerät aus der Unterhaltungselektronik. Das technische Gerät 1 weist ein erstes Sendemittel zur Erzeugung eines räumlich begrenzten Kommunikationsfeldes auf. Das Kommunikationsfeld lässt sich in einen ersten inneren Wahrnehmungsbereich 4 und einen ersten äußeren Wahrnehmungsbereich 5 unterteilen, wobei der äußere Wahrnehmungsbereich 5 den inneren Wahrnehmungsbereich 4 konzentrisch umschließt. Die Wahrnehmungsbereiche sind ferner ringförmig um das technische Gerät 1 angeordnet.

In der Nähe des technischen Gerätes befindet sich ein Anwender 7 des Systems, der ein mobiles Gerät 2, bei dem es sich beispielsweise um ein PDA handelt, mit sich führt. Das PDA 2 verfügt über ein zweites Sendemittel, welches ebenfalls ein ringförmiges, räumlich begrenztes Kommunikationsfeld erzeugt. Das durch das zweite Sendemittel erzeugte Kommunikationsfeld lässt sich auch in zwei Wahrnehmungsbereiche unterteilen, einen zweiten inneren Wahrnehmungsbereich 3 und einen zweiten äußeren Wahrnehmungsbereich 6, der den zweiten inneren Wahrnehmungsbereich konzentrisch umschließt.

Der Anwender 7 befindet sich in der Nähe des technischen Gerätes 1, so dass sich die von dem ersten und zweiten Sendemittel erzeugten Kommunikationsfelder teilweise überlappen. Dies ist Vorraussetzung für den Aufbau einer drahtlosen Kommunikation zwischen dem PDA und dem technischen Gerät.

Die Position des Anwenders 7 bzw. des von ihm mitgeführten PDA 2 ist in Relation zu dem technischen Gerät 1 derart, dass sich der erste 5 und der zweite 6 äußere Wahrnehmungsbereich teilweise überlappen. In den äußeren Wahrnehmungsbereichen 5,6 ist die Feldstärke der zugehörigen Kommunikationsfelder im Mittel geringer als in den inneren Wahrnehmungsbereichen 3,4. Daher ist bei der in FIG 1 dargestellten Überlappung der äußeren Wahrnehmungsbereiche 5,6 der Zugriff auf das technische Gerät 1 auf eine reine Beobachtungsfunktion beschränkt. Von dem technischen Gerät 1 werden zum Beispiel Zustandsdaten an das PDA 2 übermittelt. Im Falle eines als Automatisierungsgerät ausgeführten technischen Gerätes 1 kann es sich hierbei beispielsweise um Sensordaten handeln.

Sobald sich die Kommunikationsfelder teilweise überlappen, werden von dem PDA 2 Profildaten an das technische Gerät gesendet, die Auskunft über die Rolle, die Kenntnisse und die Befugnisse des Anwenders 7 geben. In Abhängigkeit dieser Profildaten werden die Informationsdaten, die von dem technischen Gerät 1 an den Anwender 7 gesendet werden selektiert und in geeigneter Weise aufbereitet. Handelt es sich bei dem Anwender 7 beispielsweise um einen Servicetechniker, so werden diesem vielleicht kritische Zustandparameter eines auf dem technischen Gerät 1 ablaufenden Prozesse übermittelt. Im Falle eines Schichtleiters als Anwender 7 werden hingegen u. U. Daten bezüglich der Maschinenauslastung des technischen Gerätes 7 gesendet.

Darüber hinaus enthalten die Profildaten auch Informationen über die Zugriffsrechte des Anwenders 7. Eine Bedienung des technischen Gerätes 1 mit Hilfe des PDA ist erst möglich, wenn der Anwender 7 sich dem technischen Gerät 1 weiter nähert, bis schließlich auch die inneren Wahrnehmungsbereiche 3,4 einen Überlappungsbereich bilden. Die möglichen Bedienoperationen, die der Anwender 7 mit dem PDA 2 in diesem Fall durchführen kann, hängen von den in den Profildaten hinterlegten Zugriffsrechten des Anwenders ab.

Die Profildaten sind auf dem PDA 2 hinterlegt und werden nach einer Authentifizierung des Anwenders 7 z. B. durch Eingabe eines Passwortes aktiviert. Alternativ können die Profildaten auch auf dem technischen Gerät 1 hinterlegt sein. In diesem Fall wird von dem PDA 2 eine Information an das technische Gerät gesendet, die den Benutzer identifizierbar macht, so dass auf dem technischen Gerät 1 ein entsprechendes Benutzerprofil aktiviert wird.

FIG 2 zeigt ein Anwendungsszenario für ein System zum drahtlosen Bedienen und Beobachten technischer Geräte 1,1a,1b,1c durch einen Anwender 7 mit einem mobilen Gerät 2. Bei den technischen Geräten 1,1a,1b,1c soll es sich um Automatisierungsgeräte handeln, die in einem industriellen Umfeld angeordnet sind. Jedes technische Gerät 1,1a,1b,1c verfügt über ein ersten Sendemittel zur Erzeugung eines ringförmigen, in einen ersten inneren 4,4a,4b,4c und ersten äußeren 5,5a,5b,5c Wahrnehmungsbereich teilbares Kommunikationsfeld. Der Anwender führt ein als HMI-Einheit ausgeführtes mobiles Gerät 2 mit sich, das ebenfalls mittels eines zweiten Sendemittels ein in einen zweiten inneren 3 und einen zweiten äußeren 6 Wahrnehmungsbereich teilbares Kommunikationsfeld erzeugt. Der Anwender 7 befindet sich mit seiner mobilen HMI-Einheit 2 in der Nähe eines ersten 1 und eines zweiten 1b Automatisierungsgerätes, wobei sich der zweite äußere Wahrnehmungsbereich 6 der HMI-Einheit 2 mit dem ersten äußeren Wahrnehmungsbereich 5 des ersten Automatisierungsgerätes 1 teilweise überlappt und sich der zweite inneren Wahrnehmungsbereich 3 der HMI-Einheit 2 mit dem ersten inneren Wahrnehmungsbereich 4b des zweiten Automatisierungsgerätes 1b teilweise überlappt.

Aufgrund der Überlappung der inneren Wahrnehmungsbereiche 3,4b der HMI-Einheit 2 und des zweiten Automatisierungsgerätes 1b kann das zweite Automatisierungsgerät 1b von dem Anwender 7 mit der HMI-Einheit 2 drahtlos bedient und beobachtet werden. Da bei der HMI-Einheit und dem ersten Automatisierungsgerät 1 nur die äußeren Wahrnehmungsbereiche 5,6 einen Überlappungsbereich bilden, ist hier nur eine Beobachtungsfunktion mit der mobilen HMI-Einheit 2 möglich.

Das erste Automatisierungsgerät 1 befindet sich in der Nähe eines dritten Automatisierungsgerätes 1a, das ebenfalls ein in zwei Wahrnehmungsbereiche unterteilbares Kommunikationsfeld mit Hilfe eines weiteren Sendemittels erzeugt. Ein äußerer Wahrnehmungsbereich 5a des dritten Automatisierungsgerätes 1a bildet einen Überlappungsbereich mit dem äußeren Wahrnehmungsbereich 5 des ersten Automatisierungsgerätes 1, so dass auch zwischen diesen beiden fest installierten Automatisierungsgeräten 1,1a eine drahtlose Kommunikation möglich ist. Auf diese Weise können auch die beiden Automatisierungsgeräte 1,1a Daten untereinander austauschen. Denkbar wäre sogar, dass von dem dritten Automatisierungsgerät 1a Daten zunächst an das erste Automatisierungsgerät 1 und von dort an die HMI-Einheit des Anwenders 7 übertragen werden.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke erhalten bleibt, dass durch mindestens eines der Sendemittel ein in mindestens zwei Wahrnehmungsbereiche teilbares Kommunikationsfeld erzeugbar ist, wobei Zugriffsrechte des mobilen Gerätes 2 abhängig davon setzbar sind, welche Wahrnehmungsbereiche des durch das erste Sendemittel erzeugten Kommunikationsfeldes 4,5 mit welchen Wahrnehmungsbereichen des durch das zweite Sendemittel erzeugten Kommunikationsfeldes 3,6 einen Überlappungsbereich bilden. Beispielsweise können die erzeugten Kommunikationsfelder auch in mehr als zwei Wahrnehmungsbereiche teilbar sein. Auf diese Weise kann die Vergabe der Zugriffsrechte an das mobile Gerät 2 in Abhängigkeit von der Position des mobilen Gerätes noch feiner gestaffelt werden. Eine Einteilung des Kommunikationsfeldes in Wahrnehmungsbereiche kann nicht nur anhand der Feldstärke des Kommunikationsfeldes erfolgen. Denkbar ist auch, verschiedenen Wahrnehmungsbereichen verschiedene Trägerfrequenzen zuzuordnen. Hierbei bietet es sich an, jedem Wahrnehmungsbereich bzw. jeder Trägerfrequenz ein eigenes Sendemittel zuzuordnen.

Eine Anwendung des Systems ist auch im privaten Konsumerumfeld denkbar. Beispielsweise können verschiedene Geräte aus dem Bereich der Unterhaltungselektronik von einem mobilen Gerät in der beschriebenen Weise drahtlos bedient und/oder beobachtet werden.

Zusammenfassend betrifft die Erfindung ein System und ein Verfahren zur drahtlosen Kommunikation zwischen einer technischen Vorrichtung und einer mobilen, von einem Anwender tragbaren Vorrichtung sowie zwischen technischen Vorrichtungen untereinander. Die technische Vorrichtung und die mobile Vorrichtung weisen Sendemittel zur Erzeugung die jeweilige Vorrichtung umgebender, räumlich begrenzter Kommunikationsfelder auf, wobei mindestens eines der Kommunikationsfelder einen inneren und einen äußeren Wahrnehmungsbereich aufweist. Bei einer Überlappung der Kommunikationsfelder der mobilen Vorrichtung und des technischen Gerätes wird eine Kommunikation zwischen dem Anwender und der technischen Vorrichtung ermöglicht. Zugriffsrechte des Anwenders auf die technische Vorrichtung sind abhängig davon, inwieweit der äußere und/oder innere Wahrnehmungsbereich in einem Überlappungsbereich der Kommunikationsfelder liegen.

## Patentansprüche

1. System zum Bedienen und Beobachten technischer Geräte mit zumindest einem ersten und einem zweiten Sendemittel zur Erzeugung räumlich begrenzter Kommunikationsfelder, wobei das erste Sendemittel einem technischen Gerät (1) zugeordnet ist und das zweite Sendemittel einem mobilen Gerät (2) zum Bedienen und Beobachten des technischen Gerätes (1) zugeordnet ist, wobei das System derartig ausgeführt ist, dass bei einer Überlappung der durch die Sendemittel erzeugten Kommunikationsfelder Informationen zwischen dem technischen Gerät (1) und dem mobilen Gerät (2) drahtlos ausgetauscht werden
**dadurch gekennzeichnet, dass** mindestens eines der Sendemittel ausgeführt ist zur Erzeugung eines in mindestens zwei Wahrnehmungsbereiche geteilten Kommunikationsfeldes mit Mitteln zum Setzen von Zugriffsrechten des mobilen Gerätes abhähngig davon, welche Wahrnehmungsbereiche des durch das erste Sendemittel erzeugten Kommunikationsfeldes (4,5) mit welchen Wahrnehmungsbereichen des durch das zweite Sendemittel erzeugten Kommunikationsfeldes (3,6) einen Überlappungsbereich bilden,
wobei bei den mindestens zwei Wahrnehmungsbereichen zumindest zwischen einem inneren und einem äußeren unterschieden wird.

2. System nach Anspruch 1,
**dadurch gekennzeichnet, dass** das mobile Gerät(2) als mobile, von einem Anwender bewegbare HMI-Einheit ausgeführt ist.

3. System nach Anspruch 2,
**dadurch gekennzeichnet,**
**dass** das mobile Gerät(2) als Web Pad, PDA oder Mobiltelefon ausgeführt ist.

4. System nach einem der vorhergehenden Ansprüche,
**dadurch gekennzeichnet, dass** das durch das zweite Sendemittel erzeugte Kommunikationsfeld zur Indikation von Profildaten eines Anwenders vorgesehen ist.

5. System nach einem der vorhergehenden Ansprüche,
**dadurch gekennzeichnet, dass** das Kommunikationsfeld des ersten Sendemittels einen ersten inneren Wahrnehmungsbereich (4) und einen ersten äußeren Wahrnehmungsbereich (5) aufweist, wobei der erste äußere Wahrnehmungsbereich (5) den ersten inneren Wahrnehmungsbereich (4) im Wesentlichen konzentrisch umschließt.

6. System nach einem der vorhergehenden Ansprüche,
**dadurch gekennzeichnet, dass** das Kommunikationsfeld des zweiten Sendemittels einen zweiten inneren Wahrnehmungsbereich (4) und einen zweiten äußeren Wahrnehmungsbereich (5) aufweist, wobei der zweite äußere Wahrnehmungsbereich (5) den zweiten inneren Wahrnehmungsbereich (4) im Wesentlichen konzentrisch umschließt.

7. System nach Anspruch 5 und 6,
**dadurch gekennzeichnet, dass** das System derartig ausgeführt ist, dass bei einer Überlappung der ersten und zweiten äußeren Wahrnehmungsbereiche (3,5) das technische Gerät (1) mit dem mobilen Gerät (2) beobachtbar ist und bei einer Überlappung der ersten und zweiten inneren Wahrnehmungsbereiche (4,6) das technische Gerät (1) mit dem mobilen Gerät (2) bedienbar ist.

8. System nach einem der vorhergehenden Ansprüche,
**dadurch gekennzeichnet, dass** das mobile Gerät (2) als beweglicher Roboter ausgeführt ist.

9. System nach einem der vorhergehenden Ansprüche,
**dadurch gekennzeichnet, dass** das erste und das zweite Sendemittel als Wireless-LAN-Access-Point, DECT-Access-Point oder Bluetooth-Access-Point ausgebildet sind.

10. System nach einem der vorhergehenden Ansprüche,
**dadurch gekennzeichnet, dass** die zwei Wahrnehmungsbereiche durch die Höhe der Feldstärke des Kommunikationsfeldes innerhalb der Wahrnehmungsbereiche unterschieden werden.

11. System nach einem der vorhergehenden Ansprüche,
**dadurch gekennzeichnet, dass** das System für Bedien- und/oder Beobachtungsaufgaben in der industriellen Automatisierungstechnik vorgesehen ist.

12. Verfahren zum Bedienen und Beobachten technischer Geräte, bei dem mit zumindest einem ersten und einem zweiten Sendemittel räumlich begrenzte Kommunikationsfelder erzeugt werden, wobei das erste Sendemittel einem technischen Gerät (1) zugeordnet ist und das zweite Sendemittel einem mobilen Gerät (2) zum Bedienen und Beobachten des technischen Gerätes (1) zugeordnet ist, wobei bei einer Überlappung der durch die Sendemittel erzeugten Kommunikationsfelder Informationen zwischen dem technischen Gerät (1) und dem mobilen Gerät (2) drahtlos ausgetauscht werden,
**dadurch gekennzeichnet, dass** mit mindestens einem Sendemittel ein in mindestens zwei Wahrnehmungsbereiche teilbares Kommunikationsfeld erzeugt wird, wobei Zugriffsrechte des mobilen Gerätes (2) abhängig davon gesetzt werden, welche Wahrnehmungsbereiche des durch das erste Sendemittel erzeugten Kommunikationsfeldes (4,5) mit welchen Wahrnehmungsbereichen des durch das zweite Sendemittel erzeugten Kommunikationsfeldes (3,6) einen Überlappungsbereich bilden,
wobei bei den mindestens zwei Wahrnehmungsbereichen zumindest zwischen einem inneren und einem äußeren unterschieden wird..

13. Verfahren nach Anspruch 12,
**dadurch gekennzeichnet, dass** als mobiles Gerät(2) eine mobile, von einem Anwender bewegbare HMI-Einheit verwendet wird.

14. Verfahren nach Anspruch 13,
**dadurch gekennzeichnet,**
**dass** als das mobile Gerät(2) ein Web Pad, PDA oder Mobiltelefon verwendet wird.

15. Verfahren nach einem der Ansprüche 12 bis 14,
**dadurch gekennzeichnet, dass** mit dem durch das zweite Sendemittel erzeugten Kommunikationsfeld Profildaten eines Anwenders indiziert werden.

16. Verfahren nach einem der Ansprüche 12 bis 15,
**dadurch gekennzeichnet, dass** das Kommunikationsfeld des ersten Sendemittels einen ersten inneren Wahrnehmungsbereich (4) und einen ersten äußeren Wahrnehmungsbereich (5) aufweist, wobei der erste äußere Wahrnehmungsbereich (5) den ersten inneren Wahrnehmungsbereich (4) im Wesentlichen konzentrisch umschließt.

17. Verfahren nach einem der Ansprüche 12 bis 16,
**dadurch gekennzeichnet, dass** das Kommunikationsfeld des zweiten Sendemittels einen zweiten inneren Wahrnehmungsbereich (4) und einen zweiten äußeren Wahrnehmungsbereich (5) aufweist, wobei der zweite äußere Wahrnehmungsbereich (5) den zweiten inneren Wahrnehmungsbereich (4) im Wesentlichen konzentrisch umschließt.

18. Verfahren nach einem der Ansprüche 16 und 17,
**dadurch gekennzeichnet, dass** bei einer Überlappung der ersten und zweiten äußeren Wahrnehmungsbereiche (3,5) das technische Gerät (1) mit dem mobilen Gerät (2) beobachtet wird und bei einer Überlappung der ersten und zweiten inneren Wahrnehmungsbereiche (4,6) das technische Gerät (1) mit dem mobilen Gerät (2) bedient wird.

19. Verfahren nach einem der Ansprüche 12 bis 18,
**dadurch gekennzeichnet, dass** das ein beweglicher Roboter als mobiles Gerät (2) eingesetzt wird.

20. Verfahren nach einem der Ansprüche 12 bis 19,
**dadurch gekennzeichnet, dass** als erstes und als zweites Sendemittel ein Wireless-LAN-Access-Point, DECT-Access-Point oder Bluetooth-Access-Point eingesetzt wird.

21. Verfahren nach einem der Ansprüche 12 bis 20,
**dadurch gekennzeichnet dass** die zwei Wahrnehmungsbereiche durch die Höhe der Feldstärke des Kommunikationsfeldes innerhalb der Wahrnehmungsbereiche unterschieden werden.

22. Verfahren nach einem der Ansprüche 12 bis 21, **dadurch gekennzeichnet, dass** das Verfahren für Bedien- und/oder Beobachtungsaufgaben in der industriellen Automatisierungstechnik angewendet wird.

## Claims

1. System for operating and observing technical appliances having at least one first and a second transmission means for producing spatially limited communication fields, wherein the first transmission means is associated with a technical appliance (1) and the second transmission means is associated with a mobile appliance (2) for operating and observing the technical appliance (1), wherein the system is designed such that in the event of an overlap in the communication fields produced by the transmission means, information is interchanged wirelessly between the technical appliance (1) and the mobile appliance (2), **characterized in that** at least one of the transmission means is designed to produce a communication field which is divided into at least two sensing areas and has means for setting access rights for the mobile appliance on the basis of which sensing areas of the communication field (4, 5) produced by the first transmission means form an overlap area with which sensing areas of the communication field (3, 6) produced by the second transmission means, wherein the at least two sensing areas have a distinction drawn at least between an inner sensing area and an outer sensing area.

2. System according to Claim 1,
**characterized in that** the mobile appliance (2) is in the form of a mobile HMI unit which can be moved by a user.

3. System according to Claim 2,
**characterized**
**in that** the mobile appliance (2) is in the form of a web pad, PDA or mobile telephone.

4. System according to one of the preceding claims,
**characterized in that** the communication field produced by the second transmission means is provided for the purpose of indicating profile data for a user.

5. System according to one of the preceding claims,
**characterized in that** the communication field of the first transmission means has a first inner sensing area (4) and a first outer sensing area (5), wherein the first outer sensing area (5) surrounds the first inner sensing area (4) essentially concentrically.

6. System according to one of the preceding claims,
**characterized in that** the communication field of the second transmission means has a second inner sensing area (4) and a second outer sensing area (5), wherein the second outer sensing area (5) surrounds the second inner sensing area (4) essentially concentrically.

7. System according to Claims 5 and 6,
**characterized in that** the system is designed such that in the event of an overlap in the first and second outer sensing areas (3, 5), the technical appliance (1) can be observed with the mobile appliance (2), and in the event of an overlap in the first and second inner sensing areas (4, 6), the technical appliance (1) can be operated with the mobile appliance (2).

8. System according to one of the preceding claims,
**characterized in that** the mobile appliance (2) is in the form of a moving robot.

9. System according to one of the preceding claims,
**characterized in that** the first and second transmission means are in the form of a wireless LAN access point, DECT access point or Bluetooth access point.

10. System according to one of the preceding claims,
**characterized in that** the two sensing areas are distinguished by the level of the field strength of the communication field within the sensing areas.

11. System according to one of the preceding claims,
**characterized in that** the system is provided for operating and/or observation tasks in industrial automation engineering.

12. Method for operating and observing technical appliances, in which at least one first and a second transmission means are used to produce spatially limited communication fields, wherein the first transmission means is associated with a technical appliance (1) and the second transmission means is associated with a mobile appliance (2) for operating and observing the technical appliance (1), wherein in the event of an overlap in the communication fields produced by the transmission means, information is interchanged wirelessly between the technical appliance (1) and the mobile appliance (2),
**characterized in that** at least one transmission means is used to produce a communication field which can be divided into at least two sensing areas, wherein access rights for the mobile appliance (2) are set on the basis of which sensing areas of the communication field (4, 5) produced by the first transmission means form an overlap area with which sensing areas of the communication field (3, 6) produced by the second transmission means,
wherein the at least two sensing areas have a distinction drawn at least between an inner sensing area and an outer sensing area.

13. Method according to Claim 12,
**characterized in that** the mobile appliance (2) used is a mobile HMI unit which can be moved by a user.

14. Method according to Claim 13,
**characterized**
**in that** the mobile appliance (2) used is a web pad, PDA or mobile telephone.

15. Method according to one of Claims 12 to 14,
**characterized in that** the communication field produced by the second transmission means is used to indicate profile data for a user.

16. Method according to one of Claims 12 to 15,
**characterized in that** the communication field of the first transmission means has a first inner sensing area (4) and a first outer sensing area (5), wherein the first outer sensing area (5) surrounds the first inner sensing area (4) essentially concentrically.

17. Method according to one of Claims 12 to 16,
**characterized in that** the communication field of the second sensing means has a second inner sensing area (4) and a second outer sensing area (5), wherein the second outer sensing area (5) surrounds the second inner sensing area (4) essentially concentrically.

18. Method according to either of Claims 16 and 17,
**characterized in that** in the event of an overlap in the first and second outer sensing areas (3, 5), the technical appliance (1) is observed with the mobile appliance (2), and in the event of an overlap in the first and second inner sensing areas (4, 6), the technical appliance (1) is operated with the mobile appliance (2).

19. Method according to one of Claims 12 to 18,
**characterized in that** a moving robot is used as the mobile appliance (2).

20. Method according to one of Claims 12 to 19,
**characterized in that** the first and second transmission means used are a wireless LAN access point, DECT access point or Bluetooth access point.

21. Method according to one of Claims 12 to 20,
**characterized in that** the two sensing areas are distinguished by the level of the field strength of the communication field within the sensing areas.

22. Method according to one of Claims 12 to 21,
**characterized in that** the method is used for operating and/or observation tasks in industrial automation engineering.

## Revendications

1. Système de commande et d'observation d'appareils techniques comprenant au moins un premier et un deuxième moyen d'émission pour la production de champs de communication limités dans l'espace, le premier moyen d'émission étant affecté à un appareil ( 1 ) technique et le deuxième moyen d'émission étant affecté à un appareil ( 2 ) mobile pour la commande et l'observation de l'appareil ( 1 ) technique, le système étant tel que, lors d'un recouvrement des champs de communication produits par les moyens d'émission, des informations sont échangées sans fil entre l'appareil ( 1 ) technique et l'appareil ( 2 ) mobile, **caractérisé en ce que** au moins l'un des moyens d'émission est réalisé pour la production d'un champ de communication subdivisé en au moins deux domaines de perception ayant des moyens pour établir des droits d'accès de l'appareil mobile en fonction des domaines de perception du champ ( 4, 5 ) de communication produit par le premier moyen d'émission, qui forment un domaine de chevauchement avec des domaines de perception du champ ( 3, 6 ) de communication produit par le deuxième moyen d'émission, dans lequel, dans les au moins deux domaines de perception une différence est faite entre un intérieur et un extérieur.

2. Système suivant la revendication 1,
**caractérisé en ce que** l'appareil ( 2 ) mobile est réalisé en unité HMI mobile pouvant être déplacé par un utilisateur.

3. Système suivant la revendication 2,
**caractérisé en ce que** l'appareil ( 2 ) mobile est réalisé en Web Pad, en PDAA ou en téléphone mobile.

4. Système suivant l'une des revendications précédentes,
**caractérisé en ce que** le champ de communication produit par le deuxième moyen d'émission est prévu pour l'indication de données de profil d'un utilisateur.

5. Système suivant l'une des revendications précédentes, **caractérisé en ce que** le champ de communication des premiers moyens d'émission a un premier domaine ( 4 ) intérieur de perception et un premier domaine ( 5 ) extérieur de perception le premier domaine ( 5 ) extérieur de perception entourant sensiblement concentriquement le premier domaine ( 4 ) intérieur de perception.

6. Système suivant l'une des revendications précédentes, **caractérisé en ce que** le champ de communication du deuxième moyen d'émission a un deuxième domaine ( 4 ) intérieur de perception et un deuxième domaine ( 5 ) extérieur de perception, le deuxième domaine ( 5 ) extérieur de perception entourant sensiblement concentriquement le deuxième domaine ( 4 ) intérieur de perception.

7. Système suivant la revendication 5 et 6, **caractérisé en ce que** le système est tel que, lors de recouvrement des premier et deuxième domaines ( 3, 5 ) extérieurs de perception, l'appareil ( 1 ) technique peut être observé par l'appareil ( 2 ) mobile et, lors d'un recouvrement des premier et deuxième domaines ( 4, 6 ) intérieurs de perception, l'appareil ( 1 ) technique peut être commandé par l'appareil ( 2 ) mobile.

8. Système suivant l'une des revendications précédentes, **caractérisé en ce que** l'appareil ( 2 ) mobile est réalisé en robot mobile.

9. Système suivant l'une des revendications précédentes, **caractérisé en ce que** le premier et le deuxième moyen d'émission sont constitués sous la forme de Wireless-LAN-Access-Point, de DECT-Access-Point ou de Bluetooth-Access-Point.

10. Système suivant l'une des revendications précédentes, **caractérisé en ce que** les deux domaines de perception sont différenciés par l'amplitude de l'intensité du champ de communication au sein des domaines de perception.

11. Système suivant l'une des revendications précédentes, **caractérisé en ce que** le système est prévu pour des tâches de commande et/ou d'observation dans la technique d'automatisation industrielle.

12. Procédé de commande et d'observation d'appareils techniques, dans lequel on produit des champs de communication limités dans l'espace par au moins un premier et un deuxième moyen d'émission, le premier moyen d'émission étant affecté à un appareil ( 1 ) technique et le deuxième moyen d'émission à un appareil ( 2 ) mobile pour la commande et l'observation de l'appareil ( 1 ) technique, dans lequel lors d'un recouvrement des champs de communication produit par les moyens d'émission, on échange sans fil des informations entre l'appareil ( 1 ) technique et l'appareil ( 2 ) mobile,
**caractérisé en ce que** l'on produit par au moins un moyen d'émission un champ de communication pouvant être subdivisé en au moins deux domaines de perception, on met des droits d'accès de l'appareil ( 2 ) mobile en fonction des domaines de perception du champ ( 4, 5 ) de communication produit par le premier moyen d'émission qui forment un domaine de recouvrement avec les domaines de perception du champ ( 3, 6 ) de communication produit par le deuxième moyen d'émission,
dans lequel, dans les au moins deux domaines de perception, on distingue au moins entre un intérieur et un extérieur.

13. Procédé suivant la revendication 12,
**caractérisé en ce que** l'on utilise, comme un appareil ( 2 ) mobile, une unité HMI mobile pouvant être déplacée par un utilisateur.

14. Procédé suivant la revendication 13,
**caractérisé en ce que** l'on utilise, comme appareil ( 2 ) mobile, un web pad, un PDA ou un téléphone mobile.

15. Procédé suivant l'une des revendications 12 à 14, **caractérisé en ce que** l'on indique des données de profil d'un utilisateur par le champ de communication produit par le deuxième moyen d'émission.

16. Procédé suivant l'une des revendications 12 à 15, **caractérisé en ce que** le champ de communication au premier moyen d'émission a un premier domaine ( 4 ) intérieur de perception et un premier domaine ( 5 ) extérieur de perception, le premier domaine ( 5 ) extérieur de perception entourant sensiblement concentriquement le premier domaine ( 4 ) intérieur de perception.

17. Procédé suivant l'une des revendications 12 à 16, **caractérisé en ce que** le champ de communication du deuxième moyen d'émission a un deuxième domaine ( 4 ) intérieur de perception et un deuxième domaine ( 5 ) extérieur de perception, le deuxième domaine ( 5 ) extérieur de perception entourant sensiblement concentriquement le deuxième domaine ( 4 ) intérieur de perception.

18. Procédé suivant l'une des revendications 12 à 17, **caractérisé en ce que**, lors d'un recouvrement des premier et deuxième domaines ( 3, 5 ) extérieurs de perception, on observe l'appareil ( 1 ) technique par l'appareil ( 2 ) mobile et, lors d'un recouvrement des premier et deuxième domaines ( 4, 6 ) intérieurs de perception, on commande l'appareil ( 1 ) technique par l'appareil ( 2 ) mobile.

19. Procédé suivant l'une des revendications 12 à 18, **caractérisé en ce que** l'on utilise, comme appareil ( 2 ) mobile, un robot mobile.

20. Procédé suivant l'une des revendications 12 à 19, **caractérisé en ce que** l'on utilise comme premier et comme deuxième moyen d'émission un Wireless-LAN-Access-Point, un DECT-Access-Point ou un Bluetooth-Access-point.

21. Procédé suivant l'une des revendications 12 à 20, **caractérisé en ce que** l'on différencie les deux domaines de perception par l'amplitude de l'intensité du champ de communication au sein des domaines de perception.

22. Procédé suivant l'une des revendications 12 à 21, **caractérisé en ce que** l'on applique le procédé à des tâches de commande et/ou d'observation dans la technique d'automatisation industrielle.
